# EUROPÄISCHE PATENTSCHRIFT

(11) **EP 4 440 386 B1**
(45) Veröffentlichungstag und Bekanntmachung des Hinweises auf die Patenterteilung: **29.10.2025**
(21) Anmeldenummer: 22817217.7
(22) Anmeldetag: 10.11.2022
(51) Int. Cl.: A47J 27/04, F24C 15/32

(54) **HAUSHALTS-DAMPFGARGERÄT MIT DAMPFBEHANDLUNGSSCHUBLADE**
DOMESTIC STEAM COOKING APPLIANCE HAVING A STEAM TREATMENT DRAWER
APPAREIL MÉNAGER DE CUISSON À LA VAPEUR AVEC TIROIR DE TRAITEMENT À LA VAPEUR

(30) Priorität: 01.12.2021 DE 102021213618
(43) Veröffentlichungstag der Anmeldung: 09.10.2024
(73) Patentinhaber: BSH Hausgeräte GmbH, 81739 München (DE)
(72) Erfinder: BALL, Ludovic, 67770 Sessenheim (FR); DIEDERICHS, Stefan, 75447 Sternenfels (DE)
(86) Internationale Anmeldenummer: PCT/EP2022/081548
(87) Internationale Veröffentlichungsnummer: WO 2023/099158

(56) Entgegenhaltungen:
- WO-A1-2021/228647
- KR-B1- 102 213 170
- US-A1- 2008 302 253

## Beschreibung

Die Erfindung betrifft ein Haushalts-Dampfgargerät, aufweisend eine aus einem Schubladengehäuse horizontal nach vorne ausfahrbare Schublade, wobei die Schublade einen vorderseitigen Tankabschnitt, der zur Aufnahme eines Wassertanks ausgerüstet ist, und einen hinter dem Tankabschnitt angeordneten Dämpferwannenabschnitt, der zur Aufnahme einer Dämpferwanne ausgebildet ist, aufweist und das Haushalts-Dampfgargerät einen Deckel aufweist, der in einer vollständig eingefahrenen Stellung der Schublade eine offene Oberseite der Dämpferwanne dampfdicht abdeckt. Die Erfindung betrifft auch ein Verfahren zum Ausfahren einer Schublade aus einem Schubladengehäuse eines Haushalts-Dampfgargeräts. Die Erfindung ist insbesondere vorteilhaft anwendbar auf Multi-Cavity-Haushalts-Gargeräte, bei denen das Haushalts-Dampfgargerät unterhalb eines weiteren Gargeräts, z.B. eines Backofens und/oder Mikrowellengeräts, angeordnet ist.

Es sind Backöfen mit einem Garraum in Vollgröße bekannt, über dem ein Wärmefach angeordnet ist. Die frontseitigen Beschickungsöffnungen von Garraum und Wärmefach sind jeweils durch frontseitig angeschlagene verschwenkbare Türen verschließbar.

Ferner sind Doppelbacköfen mit einem Garraum in Vollgröße und einem darunter angeordneten kleineren Garraum bekannt, wobei eine frontseitige Beschickungsöffnung des oberen Garraums durch eine frontseitig angeschlagene verschwenkbare Tür verschließbar ist, während der untere Garraum als nach vorne ausziehbare Schublade ausgebildet ist.

Außerdem sind Doppelstock-Gargeräte mit einer oberen Dämpferkavität und einem darunter angeordneten Backofen bekannt. Die frontseitigen Beschickungsöffnungen von Dämpferkavität und Garraum sind durch jeweilige frontseitig angeschlagene verschwenkbare Türen verschließbar.

Darüber hinaus ist ein Gargerät bekannt, das einen passiven Garraumtrenner aufweist, der durch Einschieben den Garraum in zwei weitgehend funktionell und thermisch voneinander getrennte Teil-Garräume unterteilt.

WO 2021/228647 A1 offenbart ein zum Behandeln, insbesondere zum Auftauen, zum Erwärmen und/oder zum Garen von Esswaren mittels Dampf ausgebildetes Dampfgargerät, das - mindestens eine Verdampfereinheit zum Bereitstellen von mit einer definierten Temperatur belegtem Dampf, und - mindestens einen Garraum zum Beaufschlagen der Esswaren mit dem von der Verdampfereinheit bereitgestellten Dampf, aufweist. Das Dampfgargerät ist derart ausgebildet, dass seine Wartung und die Reinigung sowie die Bedienbarkeit vereinfacht sind, wozu - das Dampfgargerät als Schublade ausgebildet ist und ein zur Aufnahme des Garraums sowie der Verdampfereinheit ausgebildetes Schubladenfach aufweist, - die Verdampfereinheit und der Garraum getrennt voneinander im Schubladenfach angeordnet sind und - der Garraum von einem im Schubladenfach anordbaren und zur Aufnahme von Esswaren ausgebildeten Esswarenbehälter gebildet ist.

Es ist die **Aufgabe** der vorliegenden Erfindung, die Nachteile des Standes der Technik zumindest teilweise zu überwinden und insbesondere eine Dampfgarschublade bereitzustellen, welche besonders gefahrlos und nutzerfreundlich bedienbar ist.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch ein Haushalts-Dampfgargerät, aufweisend eine aus einem Schubladengehäuse horizontal nach vorne ausfahrbare (Dampfbehandlungs-)Schublade, die
- einen (in Frontansicht) vorderseitigen Abschnitt ("Tankabschnitt") aufweist, der zur Aufnahme eines Wassertanks der Schublade ausgerüstet ist, und einen (in Frontansicht) hinter dem Tankabschnitt angeordneten Abschnitt ("Dämpferwannenabschnitt"), der zur Aufnahme einer Dämpferwanne der Schublade ausgebildet ist,
- einen verschwenkbar angeordneten Deckel aufweist, der in einer vollständig in das Schubladengehäuse eingefahrenen Stellung der Schublade eine offene Oberseite der Dämpferwanne dampfdicht abdeckt,
- aus ihrer vollständig eingefahrenen Stellung in eine Zwischenstellung ausfahrbar ist, in welcher der Tankabschnitt zum Befüllen des Wassertanks aus dem Schubladengehäuse vorsteht und der Deckel die offene Oberseite der Dämpferwanne dampfdicht abdeckt, und
- aus ihrer Zwischenstellung in eine vollständig ausgefahrene Endstellung ausfahrbar ist, in welcher der Deckel gegen die Dämpferwanne dergestalt automatisch verschwenkbar ist, dass dazwischen ein Spalt vorliegt.

Dieses Haushalts-Dampfgargerät weist den Vorteil auf, dass ein Nutzer die Schublade ohne Gefahr einer Benetzung mit heißem Dampf bis zu der Zwischenstellung ausfahren kann dann in der Zwischenstellung einfach den Wassertank befüllen kann, ohne dass dabei Dampf aus einem durch die Dämpferwanne und den Deckel gebildeten Dampfbehandlungsraum austritt, wodurch eine Verbrennungsgefahr durch austretenden Dampf stark verringert wird. Ein weiterer Vorteil besteht darin, dass die Dampfatmosphäre in dem Dampfbehandlungsraum beim Nachfüllen des Wassertanks nicht gestört wird und dadurch ein Garergebnis nicht verschlechtert wird.

Beim weiteren Ausfahren der Schublade über die Zwischenstellung hinaus wird der Spalt automatisch bzw. selbsttätig geöffnet, durch den Dampf im Gegensatz zu einem schwallartigen Entweichen bei sofortigem vollständigen Öffnen des Deckels zunächst mit geringem Volumenstrom entweicht, was eine Wahrscheinlichkeit einer Benetzung des Nutzers mit Dampf weiter verringert. Ist genügend Dampf durch den Spalt entwichen, kann der Deckel in der Endstellung vorteilhafterweise durch einen Nutzer einfach und sicher vollständig geöffnet werden.

Es ist eine Weiterbildung, dass sich der Spalt über eine vorgegebene Auszugsstrecke der Schublade kontinuierlich öffnet. Dies ergibt den Vorteil, dass ein langsames Abdampfen durch den Spalt besonders sicher gewährleistet wird bzw. ein anfänglich schwallartiges Ablassen des Dampfs besonders sicher vermieden wird.

Es ist eine Weiterbildung, dass die Zwischenstellung einem bestimmten Ausfahrweg der Schublade entspricht. Es ist eine Weiterbildung, dass die Zwischenstellung einem bestimmten Bereich des Ausfahrwegs der Schublade entspricht, innerhalb dessen die oben beschriebenen Bedingungen (Vorstehen bzw. Freiliegen des Wassertanks und dampfdichte Abdeckung der Dämpferwanne) erfüllt sind.

Die Schublade dient einer Halterung bzw. Aufnahme zumindest der Dämpferwanne und des Wassertanks und ggf. weiterer Komponenten wie einem aus dem Wassertank nachfüllbaren Verdampfer. Aus dem Wassertank in den Verdampfer verbrachtes Wasser wird für einen Dampfbehandlungsvorgang in dem Verdampfer zum Sieden gebracht, und der dabei entstehende Dampf wird in die Dämpferwanne geleitet. Der Verdampfer kann dazu beispielsweise mindestens ein - vorteilhafterweise bodenseitig angeordnetes - Heizelement aufweisen. Das Heizelement ist in einer Weiterbildung elektrisch betreibbar.

Dass der Tankabschnitt in der Zwischenstellung zum Befüllen des Wassertanks aus dem Schubladengehäuse vorsteht, umfasst insbesondere, dass ein Nutzer dann Zugriff auf den Wassertank hat, um ihn zu befüllen.

Es ist eine Weiterbildung, dass der Wassertank ein aus dem Tankabschnitt insbesondere nach oben entnehmbarer Wassertank ist. Der Wassertank ist dazu insbesondere in einer Tankaufnahme des Tankabschnitts entnehmbar untergebracht, insbesondere nach oben entnehmbar, und kann in umgekehrter Richtung in eine entsprechende im Tankabschnitt eingesetzt werden. Dies ergibt den Vorteil, dass die Befüllung des Wassertank, z.B. mit Frischwasser, besonders einfach durchführbar ist und ferner beim Nachfüllen kein Wasser auf andere Komponenten der Schublade fließt.

Alternativ kann der Wassertank fest in dem Tankabschnitt verbaut sein. Er kann dann z.B. eine Einfüllöffnung aufweisen, über welche er durch einen Nutzer mit Wasser befüllbar ist. Die Einfüllöffnung kann z.B. durch eine nutzerseitig abnehmbare Abdeckung abdeckbar sein. In einer Weiterbildung kann der Wassertank oberseitig offen sein und dort mittels einer Abdeckung abdeckbar sein.

Es ist eine Weiterbildung, dass die Schublade einen Verdampfer aufweist bzw. trägt und der Verdampfer in dem Tankabschnitt der Schublade angeordnet ist. Der Verdampfer kann fest an der Schublade angebracht sein oder kann nutzerseitig entnehmbar sein.

Es ist eine Weiterbildung, dass der Wassertank mit dem Verdampfer eine gemeinsame, insbesondere gemeinsam handhabbare Einheit ("Verdampfer/Tank-Einheit") bilden. Es ist eine Weiterbildung, dass die Verdampfer/Tank-Einheit zum Befüllen des Wassertanks in der Zwischenstellung aus der Schublade entnehmbar ist und folgend wieder einsetzbar ist.

Es ist eine Weiterbildung, dass der Deckel eine Glasscheibe ist oder aufweist. Es ist eine Weiterbildung, dass der Deckel (bei Frontansicht) links- und rechtsseitig Griffbereiche aufweist. Diese erlauben eine Handhabung des Deckels zum besonders sicheren Auf-und Zuklappen ohne Gefahr einer Gefahr einer Verbrennung an einer heißen Glasscheibe. Die Griffbereiche können z.B. aus Kunststoff oder einem anderen Material mit einer geringeren thermischen Leitfähigkeit als Glas bestehen. Es ist eine Weiterbildung, dass die Glasscheibe ganz von einem Kunststoffrand umgeben ist.

Der Deckel kann in einer Weiterbildung durch den Nutzer entnehmbar sein, z.B. zur Reinigung.

In der vollständig eingefahrenen Stellung der Schublade deckt der Deckel die offene Oberseite der Dämpferwanne zumindest weitgehend dampfdicht ab. Dazu kann zwischen Dämpferwanne und Deckel eine Dichtung vorhanden sein, die an der Dämpferwanne oder an dem Deckel angebracht sein kann. Der geschlossene Deckel lässt den Tankabschnitt frei, überdeckt ihn also nicht. Die vollständig eingefahrene Stellung der Schublade entspricht der üblichen Stellung bzw. Normalstellung bei einem Dampfbehandlungsbetrieb, in dem z.B. der Verdampfer betreibbar ist.

Dass sich der Dämpferwannenabschnitt in Frontansicht hinter dem Tankabschnitt befindet, umfasst, dass bei Ausfahren der Schublade zunächst ihr Tankabschnitt aus dem Schubladengehäuse vorsteht und dann erst der Dämpferwannenabschnitt. In der Zwischenstellung steht zumindest der Tankabschnitt aus dem Schubladengehäuse vor. Der Dämpferwannenabschnitt kann in der Zwischenstellung noch in dem Schubladengehäuse eingetaucht sein oder kann geringfügig aus dem Schubladengehäuse vorstehen, aber jeweils so, dass der Deckel die offene Oberseite der Dämpferwanne dampfdicht abdeckt. Die Dämpferwanne kann an dem Dämpferwannenabschnitt fest verbaut sein oder kann vorteilhafterweise nutzerseitig entnehmbar sein, insbesondere nach oben.

Spätestens in der Endstellung ist der Deckel vollständig öffenbar, in einer Ausgestaltung z.B. durch manuelles Aufklappen. Dann kann Gargut aus der Dämpferwanne entnommen werden, oder es kann die Dämpferwanne aus der Schublade entnommen und wieder eingesetzt werden.

Es ist eine Ausgestaltung, dass
- der Deckel im Bereich seines hinteren Rands verschwenkbar an der Schublade angeordnet ist,
- an der Schublade mindestens ein federunterstützter Stößel angeordnet ist, der den abgesenkten Deckel im unbelasteten Zustand um den Spalt nach oben anhebt, und
- das Schubladengehäuse mindestens ein Andrückelement aufweist, das den Deckel zumindest zwischen dem vollständig geschlossenen Zustand und der Zwischenstellung der Schublade dergestalt gegen den mindestens einen Stößel drückt, dass der Deckel dampfdicht auf die Dämpferwanne drückt und in der Endstellung keine Kraft auf den Deckel ausübt.

Dies ergibt den Vorteil, dass auf mechanisch einfach und robust umsetzbare Weise eine sichere dampfdichte Andrückung des Deckels gegen die Federkraft des mindestens einen Stößels auf die Dämpferwanne zumindest bis zu der Zwischenstellung erreichbar ist und bei weitem Ausfahren der Schublade durch die Stößel eine Schwenkbewegung des Deckels mit definierter Spaltbreite (z.B. zwischen 1 cm und 2 cm) bewirkt wird. In der Endstellung der Schublade liegt der abgesenkte Deckel unbelastet, d.h., nur aufgrund seines Gewichts, auf den Stößeln, die den Deckel dann aufgrund ihrer Federkraft spaltbreit geöffnet halten. Der Spalt weist seine größte Spalthöhe bzw. -breite am (in Frontansicht) vorderen Rand des Deckels auf. Der Stößel kann durch eine mechanische Feder wie eine Spiralfeder usw. unterstützt werden. Der Stößel kann aber auch ein Stößel einer Gasdruckfeder sein.

Es ist eine Ausgestaltung, dass das Andrückelement eine in horizontaler Richtung quer zu einer Verfahrrichtung der Schublade angeordnete Stange aufweist, an der mindestens eine drehbare Rolle angeordnet ist, welche mindestens eine Rolle zumindest zwischen dem vollständig geschlossenen Zustand und der Zwischenstellung der Schublade auf eine Oberseite des Deckels drückt. Dies ergibt den Vorteil, dass das Andrückelement den Deckel praktisch verschleißfrei kontaktiert. Wird die Schublade zwischen der geschlossenen Stellung und der Zwischenstellung verfahren, rollen die Rollen auf der Oberseite des Deckels ab.

Die mindestens eine drehbare Rolle kann insbesondere zwei drehbare Rollen umfassen, die in Frontansicht oberhalb eines seitlichen Rands des Deckels angeordnet sind. Dies bewirkt vorteilhafterweise eines besonders geringe mechanische Belastung des Deckels.

Es ist eine Ausgestaltung, dass die mindestens eine Rolle in der Endstellung der Schublade von dem Deckel abgerollt ist. Dadurch übt sie keine der Federkraft des mindestens einen Stößels entgegenwirkende Kraft mehr aus und liegt auch nicht im Weg des vollständig geöffneten Deckels. Bei Einschieben der Schublade rollt die mindestens eine Rolle wieder auf den Deckel auf und drückt diesen nach kurzer Wegstrecke wieder dampfdicht auf die Dämpferwanne.

Da die am vorderen Rand des Deckels nach unten wirkende, den Stößeln entgegengesetzte Kraft mit kontinuierlichem Auffahren der Schublade kontinuierlich nachlässt, kann durch die Verwendung der Rollen auf konstruktiv einfache Weise vorteilhafterweise erreicht werden, dass der Deckel nach der Zwischenstellung über eine gewisse Auszugsstrecke bis zur maximalen Höhe der Stößel immer weiter kontinuierlich geöffnet wird. Dies bewirkt vorteilhafterweise ein besonders langsames Ablassen des Dampfs durch den Spalt.

Es ist eine Ausgestaltung, dass der mindestens eine federunterstützter Stößel bei abgesenkten Deckel unterhalb eines vorderen Rands des Deckels angeordnet ist.

Der mindestens eine federunterstützte Stößel kann insbesondere zwei Stößel umfassen, die in Frontansicht bei abgesenktem Deckel unterhalb des vorderen Rands des Deckels angeordnet sind, insbesondere an einem links- und einem rechtsseitigen Ende. Dies bewirkt vorteilhafterweise eines besonders geringe mechanische Belastung des Deckels, speziell falls das Andrückelement zwei drehbare Rollen umfassen, die in Frontansicht oberhalb eines seitlichen Rands des Deckels angeordnet sind.

Es ist eine Ausgestaltung, dass die Dämpferwanne bei aufgeklapptem Deckel aus der Schublade entnehmbar ist, insbesondere nach oben. Dies ergibt den Vorteil, dass dampfbehandeltes Gargut besonders einfach, nämlich zusammen mit der Dämpferwanne, entnehmbar ist. Auch lässt sich die Dämpferwanne dadurch besonders einfach reinigen. Die Dämpferwanne kann dazu z.B. links- und rechtsseitige Griffe aufweisen.

Es ist eine Ausgestaltung, dass die Schublade in der Zwischenstellung und/oder in der Endstellung lösbar bzw. überwindbar arretierbar ist. In der Zwischenstellung und/oder in der Endstellung wird die Schublade also mechanisch so stabil gehalten, dass an der Schublade vorhandene Komponenten wie der Wassertank, der Deckel, die Dämpferwanne usw. durch einen Nutzer vorteilhafterweise sicher und definiert, d.h., ohne unerwünschte Verschiebung der Schublade, handhabbar sind, was wiederum eine Handhabung erleichtert. Dass die Schublade in ihrer Zwischenstellung und/oder in ihrer Endstellung überwindbar arretiert ist, umfasst insbesondere, dass die Schublade nur unter Aufbringung einer merklichen bzw. signifikanten Kraft entlang der Ausfahrrichtung aus der Stellung lösbar ist, z.B. durch Drücken der Schublade in Richtung des Schubladengehäuses, um sie in ihre vollständig eingefahrene Stellung zu verbringen, oder durch Ziehen oder Drücken der Schublade aus der Zwischenstellung heraus, um sie in die Endstellung zu verbringen.

Es ist eine Ausgestaltung, dass die Schublade nutzerseitig ausgelöst selbsttätig bzw. automatisch aus ihrer vollständig eingefahrenen Stellung in die Zwischenstellung verfahrbar ist, z.B. feder- oder motorgetrieben. Dies ergibt den Vorteil einer besonders hohen Bedienerfreundlichkeit, insbesondere da so auf ein ggf. umständliches Greifen der Schublade im vollständig eingefahrenen Zustand verzichtet werden kann.

Es ist eine alternative oder zusätzliche Weiterbildung, dass die Schublade manuell durch einen Nutzer aus seiner geschlossenen Stellung in die Zwischenstellung ausziehbar ist, und zwar rein manuell oder z.B. federunterstützt. Dies ist besonders preiswert umsetzbar.

Es ist eine Ausgestaltung, dass das Haushalts-Dampfgargerät einen nutzerseitig auslösbaren Push-Pull-Mechanismus zum Verfahren der Schublade aus ihrer vollständig eingefahrenen Stellung in die Zwischenstellung aufweist. Dies ergibt den Vorteil, dass sich eine selbsttätige Verfahrung der Schublade mit mechanisch einfachen und bewährten Mitteln robust und zuverlässig umsetzen lässt. Der Nutzer braucht dabei zum Auslösen des Push-Pull-Mechanismus die Schublade nur geringfügig in das Schubladengehäuse einzudrücken, wodurch ein Federmechanismus ausgelöst wird, welcher die Schublade selbsttätig in die Zwischenstellung verfährt. Durch ein manuelles Eindrücken der Schublade in das Schubladengehäuse wird der Push-Pull-Mechanismus wieder gespannt und bis zu einem erneuten nutzerseitigen Betätigen arretiert.

Es ist eine Ausgestaltung, dass die Schublade manuell aus der Zwischenstellung in die Endstellung ausziehbar ist. Dies ergibt den Vorteil einer besonders einfachen Umsetzung. Der Nutzer muss dazu die Schublade greifen und in Ausfahrrichtung eine Kraft aufwenden, die groß genug ist, um die Schublade in ihre Endstellung zu verbringen.

Es ist eine Ausgestaltung, dass die Schublade eine vorderseitige Abdeckplatte (auch als Blende oder Blendenplatte bezeichenbar) aufweist, welche seitlich (d.h., in Frontansicht links- und rechtsseitig) vorstehende Bereiche ("Überstandsbereiche") aufweist, die als Griffbereiche zum manuellen Ausziehen der Schublade, insbesondere aus ihrer Zwischenstellung, vorgesehen sind. So wird der Vorteil erreicht, dass die Hände eines Nutzers weit von der offenen Oberseite der Dämpferwanne entfernt sind und zudem unterhalb davon angeordnet sind, so dass auch für den Fall, dass nach Überschreiten der Zwischenstellung der Deckel öffnet, die Gefahr, dass heißer Dampf an die die Hände des Nutzers gerät, sehr gering ist.

Insbesondere auch bezüglich dieser Ausgestaltung kann die Schublade einen mit der Schublade verbundenen Tragrahmen aufweisen, der vollständig in das Schubladengehäuse einfahrbar ist und den Tankabschnitt und den Dämpferwannenabschnitt umfasst. An dem Tragrahmen ist vorderseitig die Abdeckplatte vorhanden, welche in Frontansicht seitlich über den Tragrahmen übersteht und dort die Überstandsbereiche ausweist bzw. bereitstellt.

Alternativ kann die Schublade mittels eines nutzerseitig betätigbaren oder auslösbaren Mechanismus selbsttätig bzw. automatisch aus der Zwischenstellung in die Endstellung verfahrbar sein, z.B. motorisch.

Es ist eine Ausgestaltung, dass ein an der Schublade, insbesondere in dem Tankabschnitt, angeordneter Verdampfer, der aus dem Wassertank nachfüllbar ist, in der Zwischenstellung betreibbar ist. So wird der Vorteil erreicht, dass während eines Dampfbehandlungsbetriebs der Verdampfer beim Nachfüllen des Wassertanks z.B. mit Frischwasser weiterläuft und dadurch die Dampfatmosphäre in dem Dampfbehandlungsraum vorteilhafterweise besonders wenig gestört wird. Es ist jedoch auch möglich, dass der Verdampfer in der Zwischenstellung nicht betreibbar ist, z.B. weil er bei Ausfahren der Schublade aus der vollständig eingefahrenen Stellung elektrisch und/oder steuertechnisch abgekoppelt bzw. abgetrennt wird. Dies kann aus Sicherheitsaspekten vorteilhaft sein.

Das Haushalts-Dampfgargerät kann ein eigenständiges, insbesondere eigenständig verbaubares, Haushaltsgerät sein.

Die Aufgabe wird auch gelöst durch ein Haushalts-Gargerät, aufweisend mindestens ein Haushalts-Dampfgargerät wie oben beschrieben und zusätzlich mindestens ein weiteres Gargerät mit eigenem Garraum ("Multi-Cavity"-Haushalts-Gargerät"). Das Haushalts-Gargerät kann analog zu dem Haushalts-Dampfgargerät ausgebildet sein, und umgekehrt, und weist die gleichen Vorteile auf. So wird der Vorteil erreicht, dass mittels des Haushalts-Gargerät individuell Gargut in dem Haushalts-Dampfgargerät dampfbehandelbar ist und unabhängig davon anderes Gargut in dem weiteren Gargerät wärmebehandelbar ist.

Es ist eine Weiterbildung, dass das mindestens eine weitere Gargerät ein - ggf. auch pyrolysefähiger - Backofen, ein Mikrowellengerät, ein Dampfgargerät, ein Vakuumgargerät oder eine beliebige Kombination daraus ist, z.B. ein Backofen mit Mikrowellenfunktionalität, usw.

Es ist eine Weiterbildung, dass das weitere Gargerät eine frontseitige Beschickungsöffnung aufweist, die mittels einer verschwenkbaren Tür verschließbar ist.

Es ist eine Ausgestaltung, dass das obige Dampfgargerät unterhalb eines weiteren Gargerät angeordnet ist. So wird der Vorteil einer besonders einfachen Beschickung und Entnahme von Gargut aus einem kompakten Haushalts-Dampfgargerät erreicht.

Weist das Haushalts-Gargerät zusätzlich zu dem mindestens einen Dampfgargerät mindestens ein weiteres Gargerät auf, können sie in einer Weiterbildung über eine gemeinsame Bedienoberfläche bedient werden, z.B. eine an dem mindestens einen weiteren Gargerät angeordnete Bedienblende. Zusätzlich oder alternativ kann das Dampfgargerät über eine eigenständige Bedienoberfläche bedienbar sein. Allgemein kann die Bedienoberfläche auch auf einem mobilen Nutzerendgerät wie einem Smartphone oder Tablet-PC umgesetzt sein, z.B. mittels eines entsprechenden Applikationsprogramms ("App").

Die Aufgabe wird ferner gelöst durch ein Verfahren zum Ausfahren einer Schublade aus einem Schubladengehäuse eines Haushalts-Dampfgargeräts, welche Schublade einen Tankabschnitt zur Aufnahme eines Wassertanks der Schublade und einen hinter dem Tankabschnitt angeordneten Dämpferwannenabschnitt zur Aufnahme einer Dämpferwanne aufweist, wobei bei dem Verfahren
- in einer vollständig in das Schubladengehäuse eingefahrenen Stellung der Schublade ein verschwenkbar an der Schublade angeordneter Deckel eine offene Oberseite der Dämpferwanne dampfdicht abdeckt,
- die Schublade aus ihrer vollständig eingefahrenen Stellung in eine Zwischenstellung verfahren wird, in welcher der Tankabschnitt zum Befüllen des Wassertanks aus dem Schubladengehäuse vorsteht und der Deckel die offene Oberseite der Dämpferwanne dampfdicht abdeckt und
- die Schublade aus der ersten Zwischenstellung in eine vollständig ausgefahrene Endstellung ausgefahren wird und dabei der Deckel automatisch dergestalt gegen die Dämpferwanne verschwenkt wird, dass dazwischen ein Spalt geöffnet wird.

Dieses Verfahren kann analog zu dem Haushalts-Dampfgargerät und dem Haushalts-Gargerät ausgebildet werden, und umgekehrt, und weist die gleichen Vorteile auf.

Dass der Tankabschnitt zum Befüllen des Wassertanks aus dem Schubladengehäuse vorsteht, umfasst insbesondere, dass der Wassertank freiliegt und von einem Nutzer zum Befüllen z.B. mit Frischwasser handhabbar ist, z.B. dafür entnommen werden kann.

Es ist eine Ausgestaltung, dass der Deckel im Bereich seines hinteren Rands verschwenkbar an der Schublade angeordnet ist, an der Schublade mindestens ein federunterstützter Stößel angeordnet ist, der den abgesenkten Deckel im unbelasteten Zustand um den Spalt nach oben anhebt, und das Schubladengehäuse eine in horizontaler Richtung quer zu einer Verfahrrichtung der Schublade angeordnete Stange aufweist, an der mindestens eine drehbare Rolle angeordnet ist, aufweist, wobei
- in der vollständig eingefahrenen Stellung der Schublade die mindestens eine drehbare Rolle den Deckel dampfdicht auf die Dämpferwanne drückt,
- die mindestens eine Rolle beim Verfahren der Schublade in die Zwischenstellung relativ zu dem Deckel nach hinten abrollt und
- die mindestens eine Rolle beim Verfahren der Schublade aus ihrer Zwischenstellung in eine vollständig ausgefahrene Endstellung von dem Deckel abrollt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird.
- Fig.1: zeigt als Schnittdarstellung in Seitenansicht eine Skizze eines Multi-Cavity-Haushalts-Gargeräts mit einem schubladenartigen Dampfgargerät;
- Fig.2: zeigt das Dampfgargerät als Schnittdarstellung in Seitenansicht bei vollständig eingefahrener Schublade;
- Fig.3: zeigt das Dampfgargerät in Ansicht von schräg oben bei vollständig ausgefahrener Schublade mit aufgelegtem Deckel;
- Fig.4: zeigt das Dampfgargerät als Schnittdarstellung in Seitenansicht mit der Schublade in der Zwischenstellung;
- Fig.5: zeigt das Dampfgargerät als Schnittdarstellung in Seitenansicht mit der Schublade in einer Stellung zwischen der Zwischenstellung und der Endstellung;
- Fig.6: zeigt das Dampfgargerät als Schnittdarstellung in Seitenansicht mit der Schublade in der Endstellung; und
- Fig.7: zeigt das Dampfgargerät in Ansicht von schräg oben bei vollständig ausgefahrener Schublade mit vollständig geöffnetem Deckel.

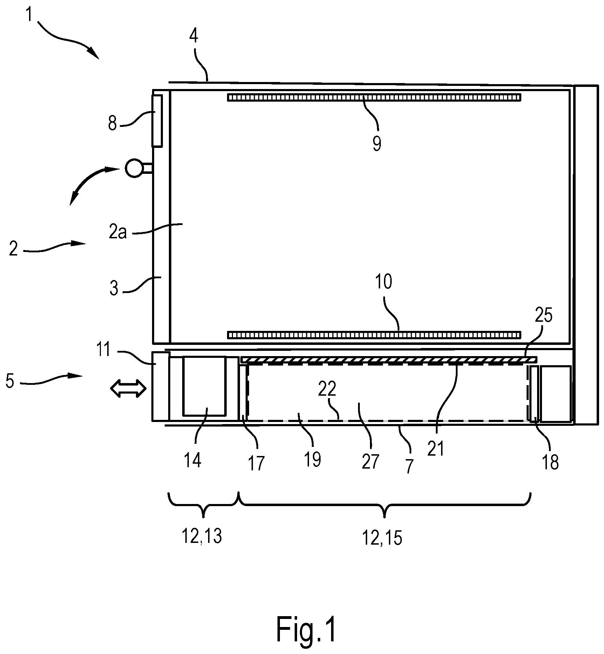

**Fig.1** zeigt als Schnittdarstellung in Seitenansicht eine Skizze eines "Multi-Cavity"-Haushalts-Gargeräts 1 mit einem Ofen 2, dessen stationärer Ofenraum 2a frontseitig mittels einer verschwenkbaren Ofentür 3 verschließbar ist, wie durch den gekrümmtem Doppelpfeil angedeutet. Innerhalb eines Gehäuses 4 des Haushalts-Gargeräts 1 unterhalb des Ofens 2 befindet sich ein von dem Ofen 2 getrennt angeordnetes Dampfgargerät 5, das eine (Dampfbehandlungs-)Schublade 6 aufweist, die horizontal in ein stationäres Schubladengehäuse 7 ein- und ausfahrbar ist, wie durch den geraden Doppelpfeil angedeutet. Das Dampfgargerät 5 weist eine geringere Höhe auf als der Ofen 2.

In der Ofentür 3 befindet sich eine gemeinsame Gerätesteuerung 8 einschließlich einer Bedienoberfläche für den Ofen 2 und das Dampfgargerät 5. Mittels der Gerätesteuerung 8 lassen sich der Ofen 2 und das Dampfgargerät 5 individuell ansteuern, so dass darin befindliche Behandlungsgüter, z.B. Gargut wie Lebensmittel, Speisen usw. unabhängig voneinander zubereiten lassen. Der Ofenraum 2a ist mittels Energieeinbringungsvorrichtungen in Form eines beispielhaft eingezeichneten Oberhitze-Heizkörpers 9 und eines Unterhitze-Heizkörpers 10 heizbar, insbesondere durch Taktung einer jeweiligen Stromzufuhr. Die Ansteuerung der Heizkörper 9 und 10 erfolgt durch die Gerätesteuerung 8. Die Gerätesteuerung 8 ist insbesondere auch dazu eingerichtet, in dem Ofenraum 2a und in der Dampfbehandlungsschublade 6 ablaufende Behandlungsvorgänge, insbesondere Endzeitpunkte der Behandlungsvorgänge, Energieeinträge und/oder eine Abluftsteuerung, aufeinander abzustimmen.

Das Haushalts-Gargerät 1 ist insbesondere so kompakt, dass es in ein Einbaunische von 60 cm x 60 cm (Einbauhöhe x Einbaubreite) passt.

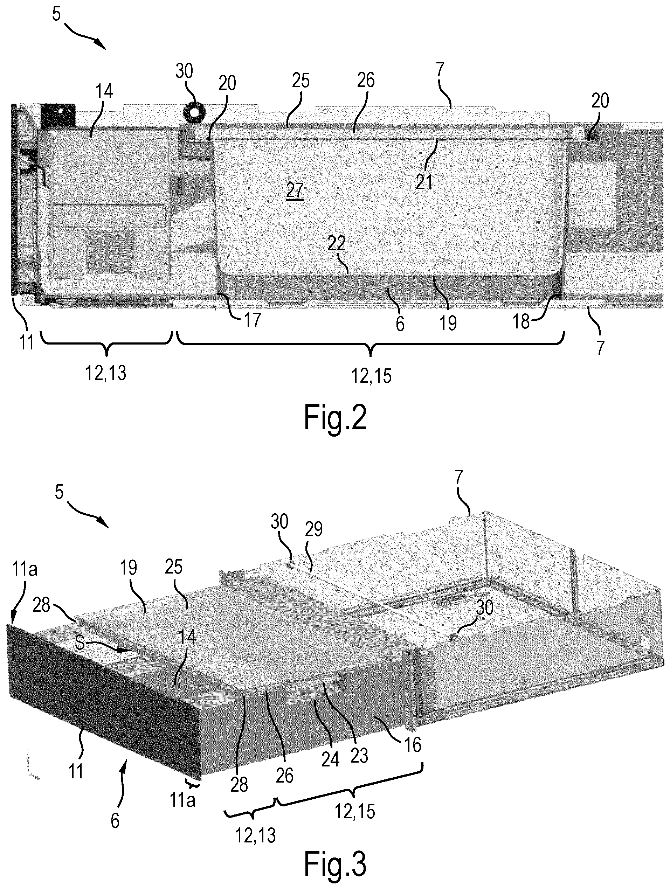

Nun auch Bezug nehmend auf Fig.2 und Fig.3 weist die Schublade 6 einen hinter einer frontseitigen Abdeckplatte 11 angeordneten, horizontal gegen das Schubladengehäuse 7 verfahrbaren Tragrahmen 12 auf, der vollständig in das Schubladengehäuse 7 einfahrbar ist. Die Abdeckplatte 11 ist bei vollständig eingefahrener Schublade 5 flächenbündig zu einer Vorderseite des Haushalts-Gargeräts 1, insbesondere auch der Ofentür 3. Die Abdeckplatte 11 ragt links- und rechtsseitig über den Tragrahmen 12 hinaus, wobei die überragenden Überstandsbereiche 11a als Griffebereiche zum Greifen und Ausziehen der Schublade 6 genutzt werden können.

Der Tragrahmen 12 weist einen unmittelbar an die Abdeckplatte 11 anschließenden vorderseitigen Tankabschnitt 13 auf, in dem ein Verdampfer (o. Abb.) und einen damit fluidisch verbundener Wassertank 14 untergebracht sind. Zumindest der Wassertank 14 ist hier beispielhaft aus dem Tankabschnitt 13 entnehmbar.

Bei Frontansicht hinter dem Tankabschnitt 13 befindet sich ein Dämpferwannenabschnitt 15. Dieser 15 weist die Form einer Umrandung mit seitlichen Wangen 16, einer vorderen Wand 17 und einer hinteren Wand 18 auf. Zumindest die Wangen 16 sind als Hohlprofile - hier mit rechteckigem Querschnitt - ausgebildet, wodurch sie besonders leicht sind und eine geschützte Durchführung von elektrischen Leitungen (o. Abb.) ermöglichen, z.B. von elektrischen Leitungen zur Stromversorgung von Heizelementen für den Verdampfer und ggf. Signalleitungen. In den hohlen Wangen 16 sind zudem Laufschienen (o. Abb.), z.B. eines Auszugmechanismus in Form eines Teleskopauszugssystems der Dampfbehandlungsschublade 5 untergebracht. Ein weiterer Vorteil bei der Verwendung von Hohlprofilen besteht darin, dass sie auf einfache Weise die Ausbildung einer breiten oberseitigen Auflagefläche zur Auflage einer Dämpferwanne 19 erlauben. Zumindest die Wangen 16 und die hintere Wand 18 weisen hier ebene Flächen auf, was ihre einfache Reinigbarkeit unterstützt. Die vordere Wand 17 und die hintere Wand 18 können ebenfalls als Hohlprofile oder als einfache Wände ohne Hohlprofil ausgebildet sein. Ihre Oberseiten können ebenfalls als Auflagefläche(n) dienen, brauchen es aber nicht.

Die Dämpferwanne 19 ist wannen- oder schalenförmig ausgebildet, und zwar hier mit einer quaderförmigen, oben offenen Grundform. Die Dämpferwanne 19 weist an ihrer Oberseite einen seitlich nach außen umgebogenen, umlaufend geschlossenen Flansch 20 auf, über den sie von oben auf die Auflageflächen aufsetzbar ist. Die Dämpferwanne 19 ist also von oben in den Dämpferwannenabschnitt 15 einsetzbar. Die obere Öffnung 21 der Dämpferwanne 19 bildet eine Beschickungsöffnung zum Einsatz von dampfzubehandelndem Behandlungsgut, z.B. Gargut.

In dem von den Wangen 16 und den Wänden 17, 18 seitlich umrandeten Bereich ist der Dämpferwannenabschnitt 15 bodenlos. Bei eingesetzter Dämpferwanne 19 bildet ihr Boden 22 einen Teilbereich des Bodens der Dampfbehandlungsschublade 5 innerhalb der Umrandung 16 bis 18. Dadurch kann die Dämpferwanne 19 besonders tief und folglich großvolumig ausgebildet sein. Ferner entfällt dort ein Boden des Tragrahmens 12, was vorteilhafterweise eine Materialeinsparung ergibt.

Die Dämpferwanne 19 weist ferner für eine einfache Handhabung seitlich vorstehende Griffe 23 auf, die bei eingesetzter Dämpferwanne 19 in eine jeweilige obenseitig offene Aussparung der seitlichen Wangen 16 in Form jeweiliger Vertiefungen 24 einpassbar sind.

Die Dampfbehandlungsschublade 5 weist außerdem einen Deckel 25 auf, der über eine umlaufende, insbesondere elastische Dichtung 26 auf die Oberseite des Flanschs 20 der Dämpferwanne 19 aufsetzbar ist und in geschlossener Stellung einen Dampfausstritt aus der Dämpferwanne 19 zu verhindern oder zumindest zu erschweren. Die Dämpferwanne 19 und der Deckel 25 bilden bzw. begrenzen einen Dampfbehandlungsraum 27, in dem das dort vorhandene Behandlungsgut mit Dampf beaufschlagbar ist.

Der Deckel 25 ist an seinem hinteren Rand an der Schublade 6 verschwenkbar angeordnet und liegt in abgesenkter Stellung im Bereich des vorderen Rands auf zwei federunterstützten Stößeln 28 auf, wie in Fig.3 für die voll ausgefahrene Schublade 6 gezeigt. Die Stößel 28 drängen den vorderen Rand des Deckels 25 gegen sein Gewicht nach oben, so dass der Deckel 25 im unbelasteten Zustand leicht verschwenkt ist und vor allem am vorderen Rand einen Spalt S gegenüber der Dämpferwanne 19 geöffnet ist. Folglich kann in der Dämpferwanne 19 befindlicher Dampf D durch den Spalt S austreten, vorteilhafterweise aber nicht wie bei einem Aufklappen des Deckels 25 als Schwall, sondern mit vergleichsweise geringem Volumenstrom. Die Spalthöhe, die vorteilhafterweise zwischen 1 cm und 2 cm beträgt, lässt sich durch die Wahl der Stößel 28 gezielt einstellen. Wird von oben eine Kraft aus den Deckel 25 ausgeübt, die größer als die Federkraft der Stößel 28 ist, senkt sich der Deckel 25 weiter auf die Dichtung 26 und verschließt die obere Öffnung der Dämpferwanne 19 dampfdicht.

Wie in Fig.2 und Fig.3 gezeigt, weist das Schubladengehäuse 7 in einem oberen und vorderen Bereich eine Stange 29 mit drehbaren Rollen 30 auf. Dabei kann Stange 29 drehbar sein und die Rollen 30 fest an der Stange 29 angebracht sein, oder die Stange 29 ist nicht drehbar, während sich die Rollen 30 gegen die Stange 29 drehen können.

Wie in Fig.2 gezeigt, drücken die Rollen 30 bei vollständig eingefahrener Schublade 6 den vorderen Rand des Deckels 25 gegen die von den Stößeln 28 nach oben ausgeübte Federkraft nach unten, so dass der Deckel 25 dampfdicht auf die Dichtung angedrückt wird.

Wie in Fig.3 gezeigt, befinden sich die Rollen 30 bei vollständig ausgefahrener Schublade 6 hinter dem Deckel 25, so dass sie keine Kraft auf ihn ausüben und der Deckel 25 deshalb am vorderen Rand durch die Stößel 28 einen Spaltbreit nach oben verschwenkt ist.

Nun wird ein vollständiges Ausfahren der Schublade 6 ausgehend von ihrer in Fig.2 beschriebenen vollständig eingefahrenen Stellung genauer beschrieben:

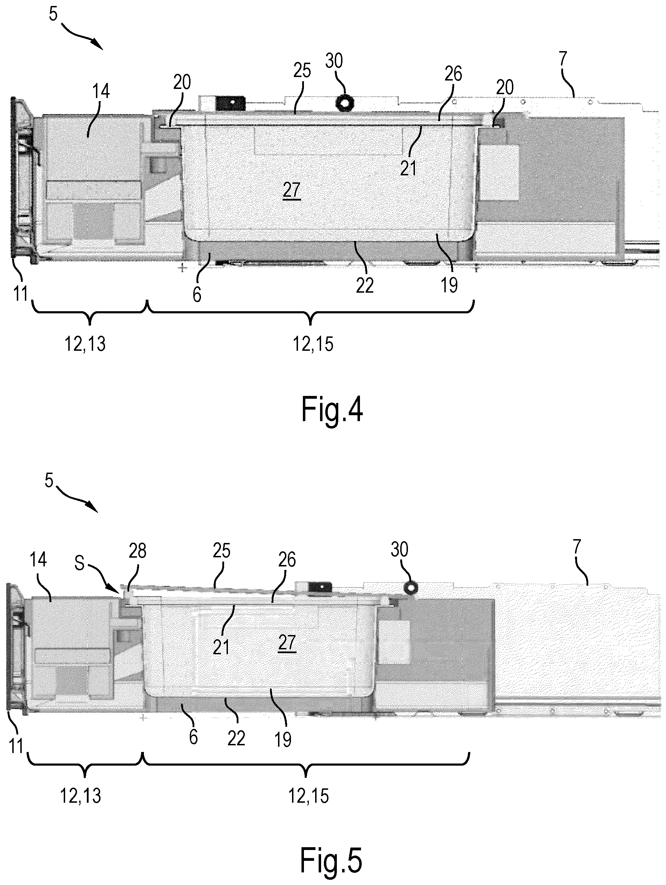

**Fig.4** zeigt das Dampfgargerät 5 als Schnittdarstellung in Seitenansicht mit der Schublade 6 in der Zwischenstellung. Diese wird - beispielsweise durch Betätigen eines Push-Pull-Mechanismus (o. Abb.) - erreicht, wobei der Deckel 25 zwischen der vollständig eingefahrenen Stellung und der Zwischenstellung unter den Rollen 30 nach vorne verfahren wird. Dabei drücken die Rollen 30 den Deckel 25 gegen die Kraft der Stößel 28 dampfdicht auf die Dichtung 26. Der Tankabschnitt 13 des Tragrahmens 12 befindet sich außerhalb des Schubladengehäuses 7, so dass der Wassertank 14 zum Befüllen freiliegt.

In der Zwischenstellung kann der Verdampfer (o. Abb.) weiterbetrieben werden oder kann alternativ deaktiviert sein.

**Fig.5** zeigt das Dampfgargerät 5 als Schnittdarstellung in Seitenansicht mit der Schublade 6 in einer Stellung zwischen der Zwischenstellung und der Endstellung. Die Rollen 30 liegen nun an einem hinteren Rand des Deckels 25 über der Schwenkachse des Deckels 25 und geben deshalb nicht mehr genügend nach unten wirkendes Moment auf den Deckel 25 auf, um dessen vorderen Rand gegen die dort nach oben wirkende Kraft der Stößel 28 dampfdicht auf der Dämpferwanne 19 zu halten. Daher haben die Stößel 28 den vorderen Rand des Deckels 25 nach oben gedrückt, so dass sich ein Spalt S gebildet hat, durch den z.B. Dampf aus der Dämpferwanne 19 austreten kann. In dieser Stellung ist der Verdampfer vorteilhafterweise deaktiviert.

Durch die Verwendung der Rollen 30 kann auf konstruktiv einfache Weise erreicht werden, dass der Deckel 25 über eine gewisse Auszugsstrecke bis zur maximalen Höhe der Stößel 28 immer weiter kontinuierlich geöffnet wird, da die am vorderen Rand des Deckels 25 nach unten wirkende, den Stößeln 28 entgegengesetzte Kraft mit kontinuierlichem Auffahren der Schublade 6 kontinuierlich nachlässt.

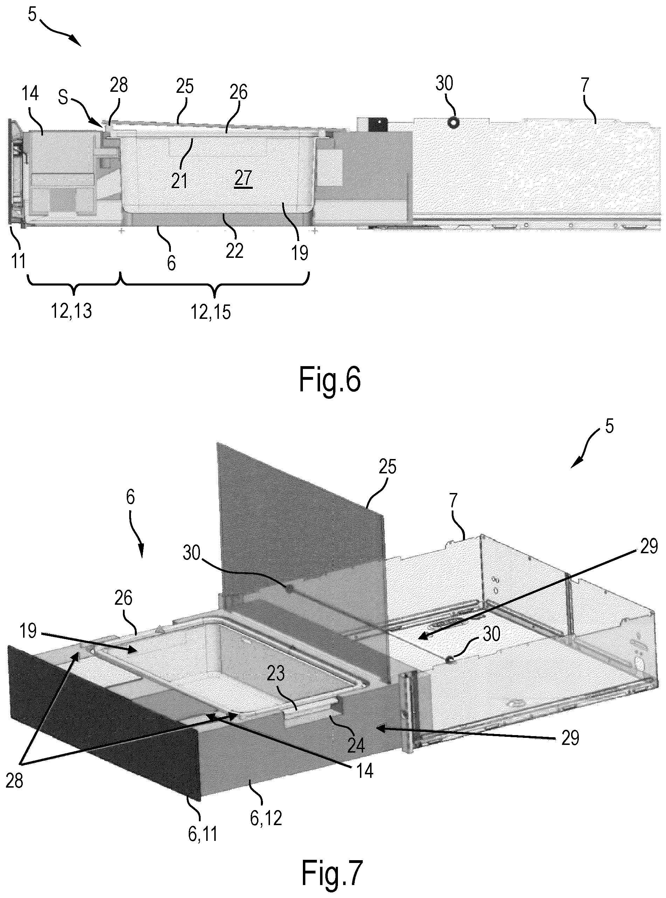

**Fig.6** zeigt das Dampfgargerät 5 als Schnittdarstellung in Seitenansicht mit der vollständig ausgefahrenen Schublade 6 in der Endstellung. Hier ist nun der Deckel 25 vollständig aus dem Schubladengehäuse 7 ausgefahren, und die Rollen 30 drücken nicht mehr auf den Deckel 25, sondern sind von diesem abgerollt. Ein Nutzer kann nun, ggf. einige Zeit nach einem Dampfablass, den Deckel greifen und durch Verschwenken in die vertikale Stellung vollständig öffnen.

**Fig.7** zeigt das Dampfgargerät 5 in Ansicht von schräg oben bei vollständig ausgefahrener Schublade 6 mit vollständig geöffnetem, vertikal stehendem Deckel 25. Ein Nutzer kann nun die Dämpferwanne 19 beschicken oder die Dämpferwanne 19 an ihren Griffen 23 greifen und aus dem Tragrahmen 12 entnehmen.

Um einen Dampfgarbetrieb zu starten oder weiterzuführen, wird der Deckel 25 wieder auf die Stößel 28 aufgelegt und dann die Schublade 6 insbesondere manuell, z.B. durch Drücken der Abdeckplatte 11 in Richtung des Schubladengehäuses 7, mit Überfahren der Zwischenstellung in die vollständig eingefahrene Stellung eingeschoben. Mit Erreichen der in Fig.5 gezeigten Stellung fahren die Rollen 30 auf den Deckel 25 auf und drücken diesen mit weiterem Einfahren wieder zu, so dass der Deckel 25 spätestens in der Zwischenstellung die Dämpferwanne 19 wieder dampfdicht abdeckt.

Der Nutzer kann auch, um nur den Wassertank 14 nachzufüllen, die Schublade 6 aus der Zwischenstellung wieder in seine vollständig eingeschobene Stellung eindrücken, wodurch der Push-Pull-Mechanismus wieder gespannt und arretiert wird.

Selbstverständlich ist die vorliegende Erfindung nicht auf das gezeigte Ausführungsbeispiel beschränkt.

So können die Zwischenstellung und/oder die Endstellung überwindbar arretierbare Stellungen sein, brauchen es aber nicht zu sein.

Auch kann die Bewegung bzw. das Verfahren der Schublade rein manuell erfolgen, d.h., ohne Push-Pull-Mechanismus. Ferner kann das Verfahren der Schublade rein motorisch erfolgen.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezugszeichenliste

- 1: Haushalts-Gargerät
- 2: Ofen
- 2a: Ofenraum
- 3: Ofentür
- 4: Gehäuse des Haushalts-Gargeräts
- 5: Dampfgargerät
- 6: Dampfbehandlungsschublade
- 7: Schubladengehäuse
- 8: Gerätesteuerung
- 9: Oberhitze-Heizkörper
- 10: Unterhitze-Heizkörper
- 11: Abdeckplatte
- 12: Tragrahmen
- 13: Tankabschnitt des Tragrahmens
- 14: Wassertank
- 15: Dämpferwannenabschnitt
- 16: Seitliche Wange des Tragrahmens
- 17: Vordere Wand des Tragrahmens
- 18: Hintere Wand des Tragrahmens
- 19: Dämpferwanne
- 20: Flansch der Dämpferwanne
- 21: Obere Öffnung der Dämpferwanne
- 22: Boden der Dämpferwanne
- 23: Griff der Dämpferwanne
- 24: Vertiefung in der seitlichen Wange
- 25: Deckel
- 26: Dichtung
- 27: Dampfbehandlungsraum

## Patentansprüche

1. Haushalts-Dampfgargerät (5), aufweisend eine aus einem Schubladengehäuse (7) horizontal nach vorne ausfahrbare Schublade (6), die
- einen vorderseitigen Tankabschnitt (13) aufweist, der zur Aufnahme eines Wassertanks (14) ausgerüstet ist, und einen hinter dem Tankabschnitt (13) angeordneten Dämpferwannenabschnitt (15), der zur Aufnahme einer Dämpferwanne (19) ausgebildet ist,
- einen verschwenkbar angeordneten Deckel (25) aufweist, der in einer vollständig in das Schubladengehäuse (7) eingefahrenen Schließstellung der Schublade (6) eine offene Oberseite (21) der Dämpferwanne (19) dampfdicht abdeckt, und
- aus ihrer vollständig eingefahrenen Stellung in eine Zwischenstellung ausfahrbar ist, in welcher der Tankabschnitt (13) zum Befüllen des Wassertanks (14) aus dem Schubladengehäuse (7) vorsteht und der Deckel (25) die offene Oberseite (21) der Dämpferwanne (19) dampfdicht abdeckt,
**dadurch gekennzeichnet, dass** die Schublade (6)
- aus ihrer Zwischenstellung in eine vollständig ausgefahrene Endstellung ausfahrbar ist, in welcher der Deckel (25) gegen die Dämpferwanne (19) dergestalt automatisch verschwenkbar ist, dass dazwischen ein Spalt (S) vorliegt.

2. Haushalts-Dampfgargerät (5) nach Anspruch 1, wobei
- der Deckel (25) im Bereich seines hinteren Rands verschwenkbar an der Schublade (6) angeordnet ist,
- an der Schublade (6) mindestens ein federunterstützter Stößel (28) angeordnet ist, der den abgesenkten Deckel (25) im unbelasteten Zustand um den Spalt (S) nach oben anhebt, und
- das Schubladengehäuse (6) mindestens ein Andrückelement (29, 30) aufweist, das den Deckel (25) zumindest zwischen dem vollständig geschlossenen Zustand und der Zwischenstellung der Schublade (6) dergestalt gegen den mindestens einen Stößel (28) drückt, dass der Deckel (25) dampfdicht auf die Dämpferwanne (19) drückt und in der Endstellung keine Kraft auf den Deckel (25) ausübt.

3. Haushalts-Dampfgargerät (5) nach Anspruch 2, wobei das Andrückelement (29, 30) eine in horizontaler Richtung quer zu einer Verfahrrichtung der Schublade (6) angeordnete Stange (29) aufweist, an der mindestens eine drehbare Rolle (30) angeordnet ist, welche mindestens eine Rolle (30) zumindest zwischen dem vollständig geschlossenen Zustand und der Zwischenstellung der Schublade (6) auf eine Oberseite des Deckels (25) drückt.

4. Haushalts-Dampfgargerät (5) nach Anspruch 3, wobei die mindestens eine Rolle (30) in der Endstellung der Schublade (6) von dem Deckel abgerollt ist.

5. Haushalts-Dampfgargerät (5) nach einem der Ansprüche 2 bis 4, wobei der mindestens eine federunterstützter Stößel (28) bei abgesenkten Deckel (25) unterhalb eines vorderen Rands des Deckels angeordnet ist.

6. Haushalts-Dampfgargerät (5) nach einem der vorhergehenden Ansprüche, wobei der Deckel (25) in der Endstellung der Schublade (6) manuell aufklappbar ist.

7. Haushalts-Dampfgargerät (5) nach Anspruch 6, wobei die Dämpferwanne (19) bei aufgeklapptem Deckel (25) nach oben aus der Schublade entnehmbar ist.

8. Haushalts-Dampfgargerät (5) nach einem der vorhergehenden Ansprüche, wobei die Schublade (6) in der Zwischenstellung und/oder in der Endstellung lösbar arretierbar ist.

9. Haushalts-Dampfgargerät (5) nach einem der vorhergehenden Ansprüche, wobei die Schublade nutzerseitig ausgelöst selbsttätig aus ihrer vollständig eingefahrenen Stellung in die Zwischenstellung verfahrbar ist und manuell aus der Zwischenstellung in die Endstellung ausziehbar ist.

10. Haushalts-Dampfgargerät (5) nach einem der vorhergehenden Ansprüche, wobei ein an der Schublade (6), insbesondere in dem Tankabschnitt (13), angeordneter Verdampfer, der aus dem Wassertank (14) nachfüllbar ist, in der Zwischenstellung betreibbar ist.

11. Haushalts-Gargerät (1), aufweisend mindestens ein Dampfgargerät (5) nach einem der vorhergehenden Ansprüche und zusätzlich mindestens ein weiteres Gargerät (2), das oberhalb des Dampfgargeräts (5) angeordnet ist.

12. Verfahren zum Ausfahren einer Schublade (6) aus einem Schubladengehäuse (7) eines Haushalts-Dampfgargeräts (5), welche Schublade (6) einen vorderseitigen Tankabschnitt (13) zur Aufnahme eines Wassertanks (14) der Schublade (6) und einen hinter dem Tankabschnitt (13) angeordneten Dämpferwannenabschnitt (15) zur Aufnahme einer Dämpferwanne (19) aufweist, wobei bei dem Verfahren
- in einer vollständig in das Schubladengehäuse (7) eingefahrenen Stellung der Schublade (6) ein verschwenkbar an der Schublade (6) angeordneter Deckel (25) eine offene Oberseite (21) der Dämpferwanne (19) dampfdicht abdeckt, und
- die Schublade (6) aus ihrer vollständig eingefahrenen Stellung in eine Zwischenstellung verfahren wird, in welcher der Wassertank (14) zum Befüllen aus dem Schubladengehäuse (7) vorsteht und der Deckel (25) die offene Oberseite (21) der Dämpferwanne (19) dampfdicht abdeckt
**dadurch gekennzeichnet, dass**
- die Schublade (6) aus der ersten Zwischenstellung in eine vollständig ausgefahrene Endstellung ausgefahren wird und dabei der Deckel (25) automatisch dergestalt gegen die Dämpferwanne (19) verschwenkt wird, dass dazwischen ein Spalt (S) geöffnet wird.

13. Verfahren nach Anspruch 12, bei dem der Deckel (25) im Bereich seines hinteren Rands verschwenkbar an der Schublade (6) angeordnet ist, an der Schublade (6) mindestens ein federunterstützter Stößel (28) angeordnet ist, der den abgesenkten Deckel (25) im unbelasteten Zustand um den Spalt (S) nach oben anhebt, und das Schubladengehäuse (6) eine in horizontaler Richtung quer zu einer Verfahrrichtung der Schublade (6) angeordnete Stange (29) aufweist, an der mindestens eine drehbare Rolle (30) angeordnet ist, aufweist, wobei
- in der vollständig eingefahrenen Stellung der Schublade (6) die mindestens eine drehbare Rolle (30) den Deckel (25) dampfdicht auf die Dämpferwanne (19) drückt,
- die mindestens eine Rolle (30) beim Verfahren der Schublade (6) in die Zwischenstellung relativ zu dem Deckel nach hinten abrollt und
- die mindestens eine Rolle (30) beim Verfahren der Schublade (6) aus ihrer Zwischenstellung in eine vollständig ausgefahrene Endstellung von dem Deckel (25) abrollt.

## Claims

1. Household steam-cooking appliance (5) having a drawer (6) which can be extended out of a drawer housing (7) horizontally to the front, which
- has a front reservoir portion (13), which is designed to receive a water reservoir (14), and an evaporator tank portion (15) arranged behind the reservoir portion (13), which is embodied to receive an evaporator tank (19),
- has a pivotably arranged lid (25) which, in a position of the drawer (6) in which it is fully retracted into the drawer housing (7), covers an open top side (21) of the evaporator tank (19) in a steam-tight manner, and
- can be extended out of its fully retracted position into an intermediate position in which the reservoir portion (13) projects out of the drawer housing (7) for filling the water reservoir (14) and the lid (25) covers the open top side (21) of the evaporator tank (19) in a steam-tight manner,
**characterised in that** the drawer (6) can be extended out of its intermediate position into a fully extended final position in which the lid (25) can be pivoted automatically against the evaporator tank (19) such that there is a gap (S) therebetween.

2. Household steam-cooking appliance (5) according to claim 1, wherein
- the lid (25) is arranged pivotably on the drawer (6) in the region of its rear edge,
- at least one spring-supported plunger (28) is arranged on the drawer (6), which plunger lifts the lowered lid (25) in an upward direction by the gap (S) in the unloaded state, and
- the drawer housing (6) has at least one press-on element (29, 30), which presses the lid (25) at least between the fully closed state and the intermediate position of the drawer (6) against the at least one plunger (28) such that the lid (25) presses onto the evaporator tank (19) in a steam-tight manner and in the final position exerts no force onto the lid (25).

3. Household steam-cooking appliance (5) according to claim 2, wherein the press-on element (29, 30) has a rod (29) arranged at right angles to a direction of movement of the drawer (6) in a horizontal direction, on which rod at least one rotatable roller (30) is arranged, which at least one roller (30) presses onto a top side of the lid (25) at least between the fully closed state and the intermediate position of the drawer (6).

4. Household steam-cooking appliance (5) according to claim 3, wherein the at least one roller (30) is rolled off from the lid in the final position of the drawer (6).

5. Household steam-cooking appliance (5) according to one of claims 2 to 4, wherein the at least one spring-supported plunger (28) is arranged below a front edge of the lid when the lid (25) is lowered.

6. Household steam-cooking appliance (5) according to one of the preceding claims, wherein the lid (25) can be lifted up manually in the final position of the drawer (6).

7. Household steam-cooking appliance (5) according to claim 6, wherein the evaporator tank (19) can be removed in an upward direction out of the drawer when the lid (25) is lifted up.

8. Household steam-cooking appliance (5) according to one of the preceding claims, wherein the drawer (6) can be locked in a releasable manner in the intermediate position and/or in the final position.

9. Household steam-cooking appliance (5) according to one of the preceding claims, wherein the drawer can be moved in an autonomous manner, initiated by the user, from its fully retracted position into the intermediate position, and can be pulled manually out of the intermediate position into the final position.

10. Household steam-cooking appliance (5) according to one of the preceding claims, wherein an evaporator, which is arranged on the drawer (6), in particular in the reservoir portion (13), and can be refilled from the water reservoir (14), can be operated in the intermediate position.

11. Household cooking appliance (1) having at least one steam-cooking appliance (5) according to one of the preceding claims and in addition at least one further cooking appliance (2), which is arranged above the steam-cooking appliance (5).

12. Method for extending a drawer (6) out of a drawer housing (7) of a household steam-cooking appliance (5), which drawer (6) has a front reservoir portion (13) for receiving a water reservoir (14) of the drawer (6), and an evaporator tank portion (15) arranged behind the reservoir portion (13) for receiving an evaporator tank (19), wherein in the method
- in a position of the drawer (6) in which it is fully retracted into the drawer housing (7), a lid (25) which is arranged pivotably on the drawer (6) covers an open top side (21) of the evaporator tank (19) in a steam-tight manner, and
- the drawer (6) is moved out of its fully retracted position into an intermediate position in which the water reservoir (14) projects out of the drawer housing (7) for filling purposes and the lid (25) covers the open top side (21) of the evaporator tank (19) in a steam-tight manner
**characterised in that**
- the drawer (6) is extended out of its intermediate position into a fully extended final position, and in this process the lid (25) is automatically pivoted against the evaporator tank (19) in such a way that a gap (S) is opened therebetween.

13. Method according to claim 12, in which the lid (25) is arranged pivotably on the drawer (6) in the region of its rear edge, at least one spring-supported plunger (28) is arranged on the drawer (6), which plunger lifts the lowered lid (25) in an upward direction by the gap (S) in the unloaded state, and the drawer housing (6) has a rod (29) which is arranged at right angles to a direction of movement of the drawer (6) in a horizontal direction, on which rod at least one rotatable roller (30) is arranged, wherein
- in the fully retracted position of the drawer (6) the at least one rotatable roller (30) presses the lid (25) onto the evaporator tank (19) in a steam-tight manner,
- the at least one roller (30) rolls backward relative to the lid when the drawer (6) is moved into the intermediate position, and
- the at least one roller (30) rolls off from the lid (25) when the drawer (6) is moved out of its intermediate position into a fully extended final position.

## Revendications

1. Appareil ménager de cuisson à la vapeur (5), présentant un tiroir (6) pouvant être déployé horizontalement vers l'avant depuis un logement de tiroir (7), lequel tiroir (6) présente
- une section de réservoir (13) côté avant, qui est équipée pour recevoir un réservoir d'eau (14), et une section de cuve de vapeur (15) disposée derrière la section de réservoir (13), qui est conçue pour recevoir une cuve de vapeur (19),
- un couvercle (25) disposé de manière pivotante qui, dans une position de fermeture du tiroir (6) complètement rentrée dans le logement de tiroir (7), recouvre de manière étanche à la vapeur un côté supérieur ouvert (21) de la cuve de vapeur (19), et
- peut être déployé à partir de sa position complètement rentrée pour se trouver dans une position intermédiaire, dans laquelle la section de réservoir (13) pour le remplissage du réservoir d'eau (14) dépasse du logement de tiroir (7) et le couvercle (25) recouvre de manière étanche à la vapeur le côté supérieur ouvert (21) de la cuve de vapeur (19),
**caractérisé en ce que** le tiroir (6)
- peut être déployé à partir de sa position intermédiaire pour se trouver dans une position finale complètement sortie, dans laquelle le couvercle (25) peut pivoter automatiquement contre la cuve de vapeur (19) de telle sorte qu'il existe une fente (S) entre eux.

2. Appareil ménager de cuisson à la vapeur (5) selon la revendication 1, dans lequel
- le couvercle (25) est disposé de manière pivotante sur le tiroir (6) dans la zone de son bord arrière,
- au moins un poussoir (28) soutenu par ressort est disposé sur le tiroir (6), lequel soulève le couvercle (25) abaissé vers le haut de la fente (S) dans l'état non chargé, et
- le logement de tiroir (6) présente au moins un élément de pression (29, 30) qui appuie sur le couvercle (25), au moins entre l'état complètement fermé et la position intermédiaire du tiroir (6), contre l'au moins un poussoir (28) de telle sorte que le couvercle (25) appuie de manière étanche à la vapeur sur la cuve de vapeur (19) et n'exerce aucune force sur le couvercle (25) dans la position finale.

3. Appareil ménager de cuisson à la vapeur (5) selon la revendication 2, dans lequel l'élément de pression (29, 30) présente une tige (29) disposée dans la direction horizontale, perpendiculairement à une direction de déplacement du tiroir (6), sur laquelle est disposé au moins un galet (30) qui appuie sur au moins un galet (30) sur une face supérieure du couvercle (25) au moins entre l'état complètement fermé et la position intermédiaire du tiroir (6).

4. Appareil ménager de cuisson à la vapeur (5) selon la revendication 3, dans lequel l'au moins un galet (30) est déplacé depuis le couvercle dans la position finale du tiroir (6).

5. Appareil ménager de cuisson à la vapeur (5) selon l'une des revendications 2 à 4, dans lequel l'au moins un poussoir (28) soutenu par ressort est disposé en dessous d'un bord avant du couvercle lorsque le couvercle (25) est abaissé.

6. Appareil ménager de cuisson à la vapeur (5) selon l'une des revendications précédentes, dans lequel le couvercle (25) peut être ouvert manuellement dans la position finale du tiroir (6).

7. Appareil ménager de cuisson à la vapeur (5) selon la revendication 6, dans lequel la cuve de vapeur (19) peut être retirée du tiroir vers le haut lorsque le couvercle (25) est ouvert.

8. Appareil ménager de cuisson à la vapeur (5) selon l'une des revendications précédentes, dans lequel le tiroir (6) peut être bloqué de manière amovible dans la position intermédiaire et/ou dans la position finale.

9. Appareil ménager de cuisson à la vapeur (5) selon l'une des revendications précédentes, dans lequel le tiroir (6) peut être déplacé automatiquement, par l'utilisateur, de sa position entièrement rentrée dans la position intermédiaire et peut être déplacé manuellement de la position intermédiaire dans la position finale.

10. Appareil ménager de cuisson à la vapeur (5) selon l'une des revendications précédentes, dans lequel un évaporateur disposé sur le tiroir (6), en particulier dans la section de réservoir (13), qui peut être rempli à partir du réservoir d'eau (14), peut être utilisé dans la position intermédiaire.

11. Appareil ménager de cuisson (1), comprenant au moins un appareil ménager de cuisson à la vapeur (5) selon l'une des revendications précédentes et, en outre, au moins un autre appareil de cuisson (2), qui est disposé au-dessus de l'appareil ménager de cuisson à la vapeur (5).

12. Procédé pour déployer un tiroir (6) depuis un logement de tiroir (7) d'un appareil ménager de cuisson à la vapeur (5), lequel tiroir (6) présente une section de réservoir (13) côté avant pour recevoir un réservoir d'eau (14) du tiroir (6) et une section de cuve de vapeur (15) disposée derrière la section de réservoir (13) pour recevoir une cuve de vapeur (19), dans lequel, lors du procédé
- dans une position du tiroir (6) complètement rentrée dans le boîtier de tiroir (7), un couvercle (25) disposé de manière pivotante sur le tiroir (6) recouvre de manière étanche à la vapeur un côté supérieur ouvert (21) de la cuve de vapeur (19), et
- le tiroir (6) est déplacé depuis sa position complètement rentrée dans une position intermédiaire dans laquelle le réservoir d'eau (14) dépasse le logement de tiroir (7) pour le remplissage et le couvercle (25) recouvre de manière étanche à la vapeur le côté supérieur ouvert (21) de la cuve de vapeur (19)
**caractérisé en ce que**
- le tiroir (6) est déployé depuis la première position intermédiaire dans une position finale complètement déployée et le couvercle (25) est alors automatiquement pivoté contre la cuve de vapeur (19) de telle sorte qu'une fente (S) se forme entre eux.

13. Procédé selon la revendication 12, dans lequel le couvercle (25) est disposé de manière pivotante sur le tiroir (6) dans la zone de son bord arrière, au moins un poussoir (28) soutenu par ressort est disposé sur le tiroir (6), lequel, dans l'état non chargé, soulève vers le haut le couvercle (25) abaissé dans la zone de la fente (S), et le logement de tiroir (6) présente une tige (29) disposée dans la direction horizontale, perpendiculairement à une direction de déplacement du tiroir (6), sur laquelle est disposé au moins un galet (30), dans lequel
- dans la position complètement rentrée du tiroir (6), l'au moins un galet (30) appuie sur le couvercle (25) de manière étanche à la vapeur sur la cuve de vapeur (19),
- l'au moins un galet (30) est déplacé vers l'arrière par rapport au couvercle lors du déplacement du tiroir (6) dans la position intermédiaire, et
- l'au moins un galet (30) est déplacé du couvercle (25) depuis sa position intermédiaire dans une position finale entièrement déployée lors du déplacement du tiroir (6).
